# EUROPEAN PATENT SPECIFICATION

(11) **EP 4 044 745 B1**
(45) Date of publication and mention of the grant of the patent: **25.06.2025**
(21) Application number: 19951038.9
(22) Date of filing: 28.10.2019
(51) Int. Cl.: H04W 74/00, H04W 74/0808, H04W 76/14

(54) **DATA SENDING AND RECEIVING METHOD AND APPARATUS**
DATENSENDE- UND -EMPFANGSVERFAHREN UND -GERÄT
PROCÉDÉ ET APPAREIL D'ENVOI ET DE RÉCEPTION DE DONNÉES

(43) Date of publication of application: 17.08.2022
(73) Proprietor: Huawei Technologies Co., Ltd., Longgang District, Shenzhen, Guangdong 518129 (CN)
(72) Inventor: WANG, Junwei, Shenzhen, Guangdong 518129 (CN)
(74) Representative: Pfenning, Meinig & Partner mbB
(86) International application number: PCT/CN2019/113659
(87) International publication number: WO 2021/081700

(56) References cited:
- WO-A1-2017/126266
- WO-A1-2018/084757
- WO-A1-2019/140060
- CN-A- 106 162 900
- CN-A- 106 454 710
- CN-A- 106 507 497
- CN-A- 109 803 431
- US-A1- 2018 368 090

## Description

### TECHNICAL FIELD

This application relates to the field of communications technologies, and in particular, to a data sending method, a data receiving method, a first terminal device, a network device, a computer-readable storage medium and a communication system.

### BACKGROUND

With the development of the internet of things, terminal devices communicates with each other more frequently. In the 3rd Generation Partnership Project (3rd generation partnership project, 3GPP) protocol, an interface for direct communication between terminal devices, that is, a PC-5 interface, is discussed, and the interface is also referred to as a sidelink (sidelink, SL). Data can be directly transmitted between two terminal devices through the sidelink without being forwarded by a network device. In this way, a transmission latency between the two terminal devices can be reduced, and load of the network device can be reduced.

In a conventional solution, terminal devices intelligently perform data transmission based on a sidelink over a licensed spectrum. However, a licensed spectrum is expensive. If the licensed spectrum is not purchased, the data transmission based on the sidelink cannot be implemented between the terminal devices.

US 2018/368090 A1 discloses a method and a system for performing D2D communications using unlicensed spectrum.

WO 2019/140060 A1 discloses methods, systems, and devices for channel access and listen-before-talk approaches for new radio operation in unlicensed bands and/or licensed bands.

### SUMMARY

In order to solve the above mentioned problems, this application provides a data sending method according to claim 1, a data receiving method according to claim 6, a first terminal device according to claim 10, a network device according to claim 11, a computer-readable storage medium according to claim 12, a computer-readable storage medium according to claim 13 and a communication system according to claim 14, and may be applied to communications systems, for example, vehicle to everything (vehicle to everything, V2X), LTE-vehicle (long term evolution-vehicle, LTE-V), vehicle-to-vehicle (vehicle-to-vehicle, V2V), internet of vehicles, machine type communication (machine type communication, MTC), internet of things (Internet of things, IoT), LTE-machine (long term evolution-machine, LTE-M), machine to machine (machine to machine, M2M) communication, and internet of things, to support data transmission between terminal devices through a sidelink over an unlicensed spectrum.

### BRIEF DESCRIPTION OF DRAWINGS

FIG. 1 is a schematic diagram of a structure of a communications system according to an embodiment of this application;
FIG. 2 is a schematic flowchart of a data sending method according to an embodiment of this application;
FIG. 3 is a schematic diagram of first time period information sharing;
FIG. 4 is a schematic diagram of a data block sending process;
FIG. 5 is a schematic diagram of another data block sending process;
FIG. 6 is a schematic diagram of a time-domain information indication of a data transmission status according to an embodiment of this application;
FIG. 7 is a schematic diagram of data transmission time-domain information according to an embodiment of this application;
FIG. 8 is a schematic diagram of non-alignment between time units of a Uu interface and a PC5 interface;
FIG. 9 is a schematic flowchart of another data sending method according to an embodiment of this application;
FIG. 10 is a schematic diagram of a timing of a data sending method according to an embodiment of this application;
FIG. 11 is a schematic diagram of a structure of a communications apparatus according to an embodiment of this application;
FIG. 12 is a schematic diagram of a structure of a network device according to an embodiment of this application; and
FIG. 13 is a schematic diagram of a structure of hardware of a communications apparatus.

### DESCRIPTION OF EMBODIMENTS

It should be noted that a network architecture and a service scenario described in embodiments of this application are intended to describe technical solutions in embodiments of this application more clearly, and do not constitute a limitation on technical solutions provided in embodiments of this application. A person of ordinary skill in the art may learn that: With evolution of the network architecture and emergence of a new service scenario, technical solutions provided in embodiments of this application are also applicable to similar technical problems.

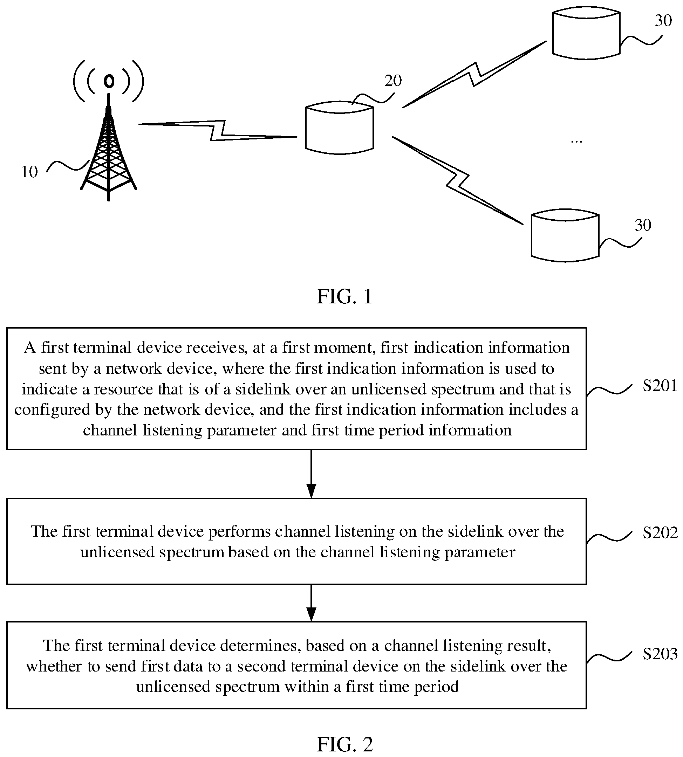

A data sending method in embodiments of this application may be applied to a communications system. For example, FIG. 1 is a schematic diagram of a structure of a communications system according to an embodiment of this application. The communications system may include a network device 10, a first terminal device 20, and a second terminal device 30. There may be one or more second terminal devices 30. The communications system may include a first network system and a second network system. The network device 10 and the first terminal device 20 may communicate with each other based on the first network system. The first terminal device 20 and the second terminal device 30 may communicate with each other based on the second network system.

For example, the first network system may be, for example, a 5th generation (5th generation, 5G) communications system, a long term evolution (long term evolution, LTE) communications system, a universal mobile telecommunications system (universal mobile telecommunications system, UMTS) terrestrial radio access network (UMTS terrestrial radio access network, UTRAN) system, or a global system for mobile communications (global system for mobile communication, GSM)/enhanced data rate for GSM evolution (enhanced data rate for GSM evolution, EDGE) radio access network (GSM EDGE radio access network, GERAN) architecture. The first network system may alternatively be, for example, a public land mobile network (public land mobile network, PLMN) system, a 6G system, or a future communications system. This is not limited in this application.

An application scenario such as future intelligent vehicle, autonomous driving, or intelligent transportation is used as an example. The second network system may be, for example, a vehicle to everything (vehicle to everything, V2X) system. Specifically, the V2X may include four parts: vehicle-to-network (vehicle-to-network, V2N), vehicle-to-vehicle (vehicle-to-vehicle, V2V), vehicle-to-infrastructure (vehicle-to-infrastructure, V2I), and vehicle-to-pedestrian (vehicle-to-pedestrian, V2P). A main function of the V2X is to enable a vehicle to connect to a cloud server through a mobile network, so that the vehicle can use application functions such as navigation, entertainment, and anti-theft provided by the cloud server. The V2V may be used for information exchange and warning between vehicles, for example, for anti-collision warning between vehicles. The V2I can be used for communication between a vehicle and a road infrastructure (for example, a traffic light or a road block), to obtain road management information such as a traffic light signal timing. The V2P can be used for a vehicle to give safety warnings to pedestrians or non-motor vehicles on the road. It may be understood that the second network system may alternatively be a network system in any other form, provided that the first terminal device 20 and the second terminal device 30 can communicate with each other through a sidelink. The second network system is not specifically limited in this embodiment of this application.

In this embodiment of this application, based on the foregoing communications system, the network device 10 may configure a resource of a sidelink over an unlicensed spectrum for the first terminal device, and send the resource of the sidelink over the unlicensed spectrum to the first terminal device 20 by using indication information. In this case, the first terminal device 20 may perform channel listening on the sidelink over the unlicensed spectrum based on the configuration of the network device 10, and determine, based on a channel listening result, whether to send data or/and a signal to the second terminal device 30 on the sidelink over the unlicensed spectrum. For example, when the channel listening result is that the listening succeeds, the first terminal device 20 sends the data or/and signal to the second terminal device 30 on the sidelink over the unlicensed spectrum. That is, according to a method combining indication by the network device and channel listening by the terminal device, the first terminal device 20 can send the data or/and signal to the second terminal device 30 on the sidelink over the unlicensed spectrum. The data herein includes data of a control channel and data of a data channel. The signal includes a signal used for channel estimation, a signal used for channel sounding, and the like.

The following describes some terms that may be used in embodiments of this application.

Both the first terminal device 20 and the second terminal device 30 in this embodiment of this application may be devices that include a wireless transceiver function and can provide a communications service for a user. Specifically, the terminal device may be a device in a V2X system, a device in a device to device (device to device, D2D) system, a device in a machine type communication (machine type communication, MTC) system, or the like. For example, the terminal device may be an industrial robot, an industrial automation device, user equipment (user equipment, UE), an access terminal, a subscriber unit, a subscriber station, a mobile station, a mobile console, a remote station, a remote terminal, a mobile device, a user terminal, a terminal, a wireless terminal device, a user agent, or a user apparatus. For example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network or a network after 5G, or a terminal device in a future evolved public land mobile network (public land mobile network, PLMN). This is not limited in this application.

The network device in embodiments of this application may be a device configured to communicate with the terminal device. For example, the network device may be a gNodeB (gNodeB, gNB) in a 5G new radio access technology (new radio access technology, NR), an evolved NodeB (evolved NodeB, eNB) in long term evolution (long term evolution, LTE), a NodeB (NodeB, NB) in a wideband code division multiple access (wideband code division multiple access, WCDMA) system, or a base transceiver station (base transceiver station, BTS) in a GSM system or a CDMA system. The network device may alternatively be a relay station, an access point, a vehicle-mounted device, a wearable device, a network side device in a network after 5G, a network device in a future evolved PLMN network, a road site unit (road site unit, RSU), a relay node having a resource allocation function of a base station, or a terminal having a resource allocation function. This is not limited in this application.

A channel listening parameter in embodiments of this application may be a channel listening parameter required in a clear channel assessment (clear channel assessment, CCA) listening mechanism, or may be a channel listening parameter required in a listen-before-talk (listen-before-talk, LBT) listening mechanism. Specific content of the listening mechanism and the channel listening parameter is not limited in embodiments of this application. It should be noted that, in embodiments of this application, the channel listening parameter is a parameter corresponding to the sidelink over the unlicensed spectrum, instead of a parameter of a cellular link in a conventional sense.

First time period information in embodiments of this application is used to indicate maximum data sending duration of the first terminal device on the sidelink over unlicensed. That is, the first terminal device may send data to the second terminal device within a first time period. For example, the first time period information may indicate a start time unit of the first time period and an end time unit of the first time period, or may indicate a quantity of time units spanned by the first time period, or may indicate a quantity of symbols included in the first time period, or may indicate a time length of the first time period. For example, the time length of the first time period may be that a start time unit is a time unit 1 and an end time unit is a time unit 7, or may be seven time units, or may be 98 symbols, or may be 4.5 ms. This is not specifically limited in embodiments of this application.

A first moment in embodiments of this application may be a moment that is pre-negotiated by the network device and the first terminal device and that is used to receive first indication information, or may be merely a description used to indicate a moment at which the first terminal device receives first indication information. The first moment is not specifically limited in embodiments of this application.

Second moment information in embodiments of this application is used to indicate the first terminal device to report a channel listening result to the network device at a second moment. Adaptively, the network device receives, at the second moment, the channel listening result reported by the first terminal device. For example, the second moment information may be used to feed back a latency representation (for example, a quantity of time units spanned between the second moment and the first moment), or may indicate a time length between the second moment and the first moment. The second moment information may be indicated by using 1-bit (bit) or multi-bit information. This is not specifically limited in embodiments of this application.

Third moment information in embodiments of this application is used to indicate the first terminal device to report a data transmission status between the first terminal device and the second terminal device to the network device at a third moment. Adaptively, the network device receives, at the third moment, the data transmission status between the first terminal device and the second terminal device that is reported by the first terminal device. For example, the third moment information may be used to feed back a latency representation (for example, a quantity of time units spanned between the third moment and the first moment), or may indicate a time length between the third moment and the first moment. The third moment information may be indicated by using 1-bit or multi-bit information. This is not specifically limited in embodiments of this application.

An unlicensed spectrum in embodiments of this application may be an unlicensed spectrum in a conventional sense, or may be a dedicated shared spectrum, for example, may be a spectrum shared with a wireless fidelity (wireless fidelity, Wi-Fi) system, or a spectrum shared with another system, for example, a sidelink over a dedicated spectrum.

Data transmission in embodiments of this application may include: data sending, data receiving, or data sending and receiving.

A time unit in embodiments of this application may be a fixed time length, one or more slots, one or more subframes, or the like. This is not limited in this application.

Listen-before-talk (listen-before-talk, LBT) types in embodiments of this application may include four types: Cat 1, Cat 2, Cat 3, and Cat 4.

Cat 1 indicates that a CCA test is not performed before data is sent.

Cat 2 is an LBT mechanism that does not perform random backoff. For example, a frame with fixed duration is used in channel listening, and includes a channel occupancy time and a channel idle time. A sender performs CCA before sending data. If a channel is idle, data transmission is performed in a subsequent channel occupancy time. Otherwise, data transmission cannot be performed in an entire frame period. That is, a time length for determining whether the channel is idle before the sender sends data is determined.

Cat 3 is a random backoff LBT mechanism with a fixed contention window. For example, in channel listening, a frame structure with a fixed contention window length and an unfixed frame period is used, and the frame period may be determined based on a load change. When the sender detects that the channel is idle, the sender can start to send data immediately. Otherwise, the sender enters the contention window.

Cat 4 is a random backoff LBT mechanism with a variable contention window. For example, in channel listening, after detecting that the channel is occupied or a maximum transmission time is reached, the sender enters the contention window. A difference from using a fixed-length contention window lies in that, the sender can change a length of the contention window. For example, based on different service types, channel access priorities may be classified into four types. The four types of channel access priorities are corresponding to different channel occupancy time (channel occupancy time, COT) lengths and contention window lengths.

The following describes the technical solutions of this application by using several embodiments as examples. A same or similar concept or process may not be described in some embodiments.

FIG. 2 is a schematic flowchart of a data sending method according to this application. As shown in FIG. 2, the method in this embodiment is as follows:
Step S201: A first terminal device receives, at a first moment, first indication information sent by a network device, where the first indication information is used to indicate a resource that is of a sidelink over an unlicensed spectrum and that is configured by the network device, and the first indication information includes a channel listening parameter and first time period information.

In this embodiment of this application, the network device may send a radio resource control (radio resource control, RRC) message to the first terminal device. The RRC message may carry the first indication information. Alternatively, the network device may send downlink control signaling (downlink control information, DCI) to the first terminal. The DCI signaling may carry the first indication information. The first terminal device may receive the first indication information sent by the network device. It may be understood that the network device may send the first indication information to the first terminal device in any form based on an actual application scenario. This is not specifically limited in embodiments of this application.

In an optional application scenario, the network device may send the first indication information to the first terminal device based on a request of the first terminal device. For example, the first terminal device may send, to the network device, a first request used to request a resource of the sidelink over the unlicensed spectrum. Optionally, the first request may include an identifier, geographical location information, and the like of the first terminal device. After obtaining the first request, the network device may perform channel listening on a sidelink over an unlicensed spectrum in a cell covered by the network device, determine, on a sidelink over an idle unlicensed spectrum, a resource that is of the sidelink over unlicensed and that is to be sent to the first terminal device, and send, to the first terminal device, the first indication information used to indicate the resource that is of the sidelink over the unlicensed spectrum and that is configured by the network device.

In another optional application scenario, the network device may automatically send, to the first terminal device based on a preset frequency or the like, the first indication information used to indicate the resource that is of the sidelink over the unlicensed spectrum and that is configured by the network device. The first terminal device may receive the first indication information. A specific scenario in which the network device sends the first indication information is not limited in embodiments of this application.

It should be noted that the first indication information in this embodiment of this application may be one piece of indication information sent by the network device to the first terminal device, or may be a plurality of pieces of indication information sent by the network device to the first terminal device. For example, the network device may send the channel listening parameter and the first time period information to the first terminal device by using only one piece of indication information, or the network device may separately send the channel listening parameter and the first time period information to the first terminal device by using two pieces of indication information. This is not specifically limited in embodiments of this application.

The sidelink over the unlicensed spectrum in this embodiment of this application may be a sidelink over a default unlicensed spectrum in the first terminal device, or may be indicated by the network device by using the first indication information. For example, the first indication information may further include a time-domain resource parameter and a frequency-domain resource parameter of the sidelink over the unlicensed spectrum. For example, the resource parameter may be at least one of a channel identifier, a carrier identifier, and a resource pool identifier, or may be another parameter used to indicate a time-domain resource and a frequency-domain resource of the sidelink over the unlicensed spectrum. This is not specifically limited in embodiments of this application.

The channel listening parameter in this embodiment of this application is used for the first terminal device to perform channel listening on the sidelink over the unlicensed spectrum. The first time period information is used to indicate maximum data sending duration of the first terminal device on the sidelink over unlicensed. For details, refer to the foregoing descriptions of the terms. Details are not described herein again. Specifically occupied bytes, included content, and the like of the channel listening parameter and the first time period information may be determined based on an actual application scenario. This is not specifically limited in embodiments of this application.

Step S202: The first terminal device performs channel listening on the sidelink over the unlicensed spectrum based on the channel listening parameter.

In this embodiment of this application, the first terminal device may perform the channel listening on the sidelink over the unlicensed spectrum based on the channel listening parameter. A specific channel listening process may be determined based on an actual channel listening parameter.

For example, the channel listening parameter may include an LBT type. In this case, the first terminal device may perform the channel listening on the sidelink over the unlicensed spectrum based on the LBT type.

In an optional implementation of this embodiment of this application, the LBT type indicated in the channel listening parameter is Cat 2. The first terminal device may perform the channel listening on the sidelink over the unlicensed spectrum for N times based on LBT Cat 2. For example, the first terminal device may continually perform short fixed-length LBT (short fixed-length LBT, where for example, duration of one LBT Cat 2 listening is 16 us or 25 us) for N times. It is considered that channel listening succeeds only when all the short fixed-length LBT for N times succeeds, so that reliability of successful channel listening can be improved. N is a natural number. A specific value of N may be determined according to a protocol, or may be configured by the network device based on an actual application scenario. That is, the channel listening parameter may further include a quantity of listening times N. N is not specifically limited in embodiments of this application.

In another optional implementation of this embodiment of this application, the LBT type indicated in the channel listening parameter is Cat 4. Channel listening of Cat 4 may further include two implementations.

In an implementation, the channel listening parameter further includes a channel access priority. In this case, the first terminal device may determine contention window duration based on the channel access priority, and perform the channel listening on the sidelink over the unlicensed spectrum within the contention window duration. For example, a channel access priority table may be as shown in Table 1.

**Table 1 Channel access priority parameter**

| Channel access priority (*p*) | *mₚ* | *CW*_{min*,p*} | *CW*_{max, *p*} | *T*_{*ulm*cot*,p*} | Allowed *CWₚ* sizes |
|---|---|---|---|---|---|
| 1 | 2 | 3 | 7 | 2 ms | {3,7} |
| 2 | 2 | 7 | 15 | 3 ms | {7,15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

p indicates a channel access priority. A smaller value of p indicates a higher priority. That is, a parameter of a contention window in which LBT needs to be performed is smaller, and maximum transmission duration T_{ulm cot, p} is smaller.

mₚ indicates a parameter of a first phase of the channel access priority p in an LBT process. That is, channel listening needs to be performed for mₚ time units before a second phase.

CWₚ is a parameter of a second phase in a process in which the first terminal device performs LBT. The parameter defines a contention window (contention window, CW) size. CW_{min, p} indicates a minimum value of a channel access contention window parameter corresponding to the channel access priority p. CW_{max, p} indicates a maximum value of the channel access contention window parameter corresponding to the channel access priority p. It may be understood that a value in Table 1 may be adjusted based on a success rate of previously transmitting data by the terminal device, or the like. For example, a higher success rate indicates a smaller selected value.

T_{ulm cot, p} indicates channel occupancy duration (less than or equal to the first time period information), that is, a maximum time for allowing the device to send data after LBT of a corresponding priority is completed. 6 ms or 10 ms in Table 1 is an optional parameter. This is not specifically limited in embodiments of this application.

In this implementation, the channel listening parameter may be indicated by the network device in the first indication information by using an information element. For example, Table 2 may show content of the information element indicating the channel listening parameter.

**Table 2 Content of the information element indicating the channel listening parameter**

| Information element | Quantity of occupied bits | Meaning |
|---|---|---|
| LBT type indication | 1 bit | 0 indicates that LBT CAT 2 is used. |
| | | 1 indicates that LBT CAT 4 is used. |
| Other LBT parameter | 2 bit (s) | If LBT CAT 2 is indicated, the other LBT parameters indicate a quantity of times N that LBT CAT 2 needs to be performed. For example, 00 indicates one time, 01 indicates two times, 10 indicates four times, and 11 indicates eight times. |
| | | If LBT CAT 4 is indicated, the other LBT parameters indicate channel access priorities. For example, 00 indicates p = 1, 01 indicates p = 2, 10 indicates p = 3, and 11 indicates p = 4. |

In the other implementation, the channel listening parameter includes contention window duration. That is, the network device first determines the contention window duration based on a channel access priority and another channel status, and then sends the contention window duration to the first terminal device. In this case, the first terminal device may perform the channel listening on the sidelink over the unlicensed spectrum within the contention window duration.

In this implementation, the channel listening parameter may be indicated by the network device in the first indication information by using an information element. For example, Table 3 may show content of the information element indicating the channel listening parameter.

**Table 3 Content of the information element indicating the channel listening parameter**

| Information element | Quantity of occupied bits | Meaning |
|---|---|---|
| LBT type indication | 1 bit | 0 indicates that LBT CAT 2 is used. |
| | | 1 indicates that LBT CAT 4 is used. |
| Other LBT parameter | 2 bit (s) | If LBT CAT 2 is indicated, the other LBT parameters indicate a quantity of times N that LBT CAT 2 needs to be performed. For example, 00 indicates one time, 01 indicates two times, 10 indicates four times, and 11 indicates eight times. |
| | | If LBT CAT 4 is indicated, the other LBT parameters indicate channel access priorities. For example, 00 indicates p = 1, 01 indicates p = 2, 10 indicates p = 3, and 11 indicates p = 4. |
| Contention windows value | 3 bit (s) | A contention window value is used to indicate a CW value of a specific priority. |
| | | For example, when p = 3, {000, 001, 010, 011, 100, 101, and 110} correspond to {15, 31, 63, 127, 255, 511, 1023} respectively. |

That is, a difference from the information element in Table 2 lies in that, the information element in Table 3 includes the information element Contention windows value used to indicate contention window duration. In this case, the first terminal device does not need to calculate the contention window duration based on the channel access priority. Therefore, computing resources of the first terminal device can be saved. In addition, because a process of determining the contention window duration is performed by the network device, the network device can accurately estimate a time at which the first terminal device completes LBT. Therefore, a more appropriate moment at which the first terminal device feeds back an LBT result may be set for the first terminal device in a subsequent possible step.

Optionally, in channel listening of Cat 4, the channel listening parameter further includes LBT maximum listening duration. The LBT maximum listening duration is a longest listening time for the first terminal device to determine whether the sidelink over the unlicensed spectrum is idle. The first terminal device performs the channel listening on the sidelink over the unlicensed spectrum within the LBT maximum listening duration. If the channel listening is not completed within the LBT maximum listening duration, it may be considered that the sidelink over the unlicensed spectrum is busy or the listening fails. In this way, the first terminal device can be prevented from being in a channel listening state for a long time, and resource occupation caused by the channel listening can be reduced.

It should be noted that the LBT maximum listening duration may also be defined as a time of a listening timer. That is, when a terminal starts channel listening, the timer is started. Before the timer expires, if it is determined that the channel listening succeeds or fails, the timer is stopped. After the timer expires, if the channel listening is not completed, it is considered that the channel is busy or the listening fails. This is not specifically limited in embodiments of this application.

It should be noted that, when the network device can obtain channel sending permission, the network device may share a channel occupancy time with the first terminal device, so that the first terminal device sends data to a second terminal device. In addition, the first terminal device may also share, with the second terminal device, a sending time shared by the network device, so that the second terminal device can send data to the first terminal device. In this channel occupancy time sharing process, the LBT type indication in the foregoing table may indicate LBT Cat 0. That is, data can be sent without a channel listening process.

Step S203: The first terminal device determines, based on a channel listening result, whether to send first data to the second terminal device on the sidelink over the unlicensed spectrum within a first time period.

In this embodiment of this application, the channel listening result may include that the listening succeeds or the listening fails. That the listening succeeds indicates that the sidelink over unlicensed is in an idle state. The first terminal device can send the first data to the second terminal device on the sidelink over unlicensed within the first time period. That the listening fails indicates that the first terminal device cannot send the first data to the second terminal device on the sidelink over unlicensed currently.

In an optional implementation, when the channel listening result is that the listening fails, the first terminal device re-detects, within first duration, indication information sent by the network device, and performs a channel listening process based on a resource that is of the sidelink over the unlicensed spectrum and that is indicated in the new indication information. Alternatively, when the channel listening result is that the listening fails, the first terminal device performs channel listening on another channel (for example, another sidelink over the unlicensed spectrum). If the listening succeeds, the first terminal device sends data to the second terminal device. Alternatively, when the channel listening result is that the listening fails, the first terminal device does not send data to the second terminal device. Alternatively, the first terminal device may send, based on an actual application scenario, only a short-time specific data packet (for example, synchronization signal data of 1 ms, control channel data of 1 ms, or a reference signal of 1 ms) allowed by the protocol, when the channel listening result is that the listening fails. This is not specifically limited in embodiments of this application.

In an optional implementation, when the channel listening result is that the listening succeeds, the first terminal device sends the first data to the second terminal device on the sidelink over the unlicensed spectrum within the first time period.

It may be understood that the first data may be data in any form, and the first terminal device may send the first data to the second terminal device on the sidelink over the unlicensed spectrum within the first time period in any data sending form. This is not specifically limited in embodiments of this application.

In conclusion, in this embodiment of this application, the network device may configure the resource of the sidelink over the unlicensed spectrum for the first terminal device, and send the resource of the sidelink over the unlicensed spectrum to the first terminal device by using the indication information. In this case, the first terminal device may perform channel listening on the sidelink over the unlicensed spectrum based on the configuration of the network device, and determine, based on a channel listening result, whether to send data to the second terminal device on the sidelink over the unlicensed spectrum. For example, when the channel listening result is that the listening succeeds, the first terminal device sends the data to the second terminal device on the sidelink over the unlicensed spectrum. That is, according to the method combining indication by the network device and channel listening by the terminal device, the first terminal device can send the data to the second terminal device on the sidelink over the unlicensed spectrum.

Optionally, based on the embodiment corresponding to FIG. 2, the method in this embodiment of this application may further include: The first terminal device sends second indication information to the second terminal device. The second indication information is used to indicate the second terminal device to send second data to the first terminal device within a second time period. The first time period includes the second time period. The first terminal device receives, within the second time period, the second data sent by the second terminal device.

In this embodiment of this application, after obtaining the first time period information by using LBT, the first terminal device may occupy the first time period to send data or a signal, or may share the first time period with the second terminal device, so that the second terminal device sends data or a signal. Specifically, the first terminal device may send second time period information (for example, start information of the second time period and time length information of the second time period) to the second terminal device, so that the second terminal device transmits the data or signal based on the second time period information. The second time period herein belongs to the first time period. That is, the first terminal device and the second terminal device may share the first time period.

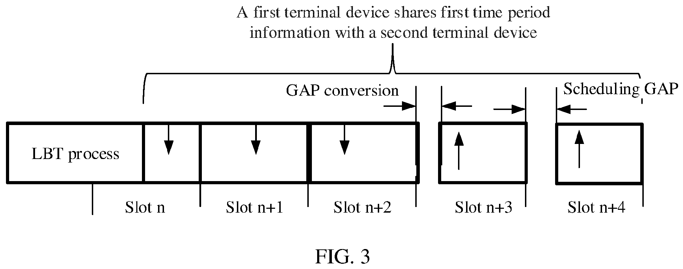

For example, as shown in FIG. 3, after the first terminal device performs an LBT process, the first terminal device may send the second indication information to the second terminal device within slots n to n+2 (or may be n+any value) when there is still remaining duration in the first time period. In this case, the second terminal device may send the second data to the first terminal device on the sidelink over the unlicensed spectrum within the second time period (for example, the remaining duration of the first time period).

In actual application, there may be a gap GAP time from receiving the second indication information by the second terminal device to sending the second data by the second terminal device to the first terminal device. A GAP period is a signal blank period. That is, neither the first terminal device nor the second terminal device sends data. To prevent the sidelink over the unlicensed spectrum from being preempted by another system during the GAP period, it may be specified that if a current GAP time is less than d1 = 16 us (microseconds), the second terminal device may directly send a signal or data to the first terminal device; if a current GAP time is greater than d1 = 16 us and less than d2 = 25 us, the second terminal device needs to perform LBT CAT 2 (one shot LBT with a shorter time); if a current GAP time is greater than d2 = 25 us, the second terminal device may need to perform LBT CAT 4 (LBT with a longer time). In a downlink of a dedicated spectrum or a special scenario (for example, it can be ensured that there is no other system), a value of d1 may be increased, so that d1 > 16 us (for example, d1 = 32 us) and d2 > 25 us (for example, d2 = 67 us). Alternatively, when there is severe interference between systems, the value of d1 can be reduced. For example, d1 < 16 us (d1 = 6.7 us) and d2 < 25 us (for example, d2 = 16 us).

In an optional implementation, when sending control information such as the second indication information to the second terminal device, the first terminal device may use a sidelink over a licensed spectrum or a sidelink over a dedicated spectrum, to ensure security of sending the second indication information. The first terminal device may send the data to the second terminal device or the second terminal device may send the data to the first terminal device on the sidelink over the unlicensed spectrum on which the listening succeeds. Alternatively, the first terminal device sends the second indication information or the data to the second terminal device on the sidelink over the unlicensed spectrum on which the listening succeeds. This is not specifically limited in embodiments of this application.

In this embodiment of this application, the first terminal device may share the first time period information with the second terminal device, so that the first terminal device and the second terminal device may send data to each other or receive data from each other, or both send and receive data to and from each other within the first time period. This makes data transmission more flexible.

Optionally, based on the embodiment corresponding to FIG. 2, the method in this embodiment of this application may further include: The first terminal device reports the channel listening result to the network device at a second moment. The first indication information further includes second moment information.

In this embodiment of this application, an example in which the first terminal device performs LBT channel listening is used. The channel listening result may be that the listening succeeds or the listening fails. The first terminal device may report the channel listening result to the network device at the second moment in a plurality of reporting forms. For example, failure information may be fed back only when the LBT channel listening fails, or success information may be fed back only when the LBT channel listening succeeds, or failure information may be fed back when the LBT channel listening fails and success information may be fed back when the LBT channel listening succeeds.

The reporting form used when the first terminal device reports the channel listening result to the network device at the second moment may be specified according to a protocol, or may be indicated by the network device by using indication information. For example, the first indication information may further include first feedback type information. For example, the first feedback type information is 2-bit information. If the first feedback type information is 00, it indicates that a feedback is provided when LBT fails or LBT succeeds. If the first feedback type information is 01, it indicates that a feedback is provided only when LBT fails. If the first feedback type information is 11, it indicates that a feedback is provided only when LBT succeeds. Alternatively, if the first feedback type information is 00, it indicates that a feedback is provided only when LBT succeeds. If the first feedback type information is 01, it indicates that a feedback is provided when LBT fails or LBT succeeds. If the first feedback type information is 11, it indicates that a feedback is provided only when LBT fails. It may be understood that in actual application, this can be randomly defined based on a requirement. This is not specifically limited in embodiments of this application.

When the first terminal device feeds back the failure information only when the LBT channel listening fails, the failure information may be indicated by using any sequence, any quantity of bits, or the like. Adaptively, the network device may determine, by performing blind detection on a sequence or the like corresponding to the failure information, whether LBT fails. If LBT failure information is detected, the network device may send new indication information including a resource of the sidelink over the unlicensed spectrum to the first terminal device. The first terminal device receives the new indication information to perform another round of LBT channel listening.

When the first terminal device feeds back the success information only when the LBT channel listening succeeds, the success information may be indicated by using any sequence, any quantity of bits, or the like. Adaptively, the network device may determine, by performing blind detection on a sequence or the like corresponding to the success information, whether LBT succeeds. If LBT success information is detected, it may be determined that the first terminal device can invoke an allocated sidelink over the unlicensed spectrum within the first time period, and the sidelink over the unlicensed spectrum is no longer allocated to another terminal device. If no LBT success information is detected, the network device may send new indication information including a resource of the sidelink over the unlicensed spectrum to the first terminal device. The first terminal device receives the new indication information to perform another round of channel listening.

When the first terminal device feeds back the failure information when the LBT channel listening fails and feeds back the success information when the LBT channel listening succeeds, different fields may be used to indicate the failure information and the success information. For example, 0 may be used to indicate the failure information, and 1 may be used to indicate the success information. Alternatively, 0 is used to indicate the success information, and 1 is used to indicate the failure information. Alternatively, an ACK is used to indicate the success information, and a NACK is used to indicate the failure information. This is not specifically limited in embodiments of this application. If the network device detects LBT success information, it may be determined that the first terminal device can invoke an allocated sidelink over the unlicensed spectrum within the first time period. If the network device detects no LBT success information, the network device may send new indication information including a resource of the sidelink over the unlicensed spectrum to the first terminal device. The first terminal device receives the new indication information to perform another round of channel listening.

It should be noted that, in this embodiment of this application, a communications link between the network device and the first terminal device may be a cellular link. The cellular link is a licensed spectrum, a dedicated spectrum, or an unlicensed spectrum. For example, data may be transmitted between the network device and the first terminal device through a radio wave, or through visible light, a laser, infrared light, an optical quantum, a power line, an optical fiber, a coaxial cable, or a copper twisted pair.

In specific application, when the network device sends data to the first terminal device, a hybrid automatic repeat request (hybrid automatic repeat request, HARQ) manner may be used. In this case, when receiving the indication information, the first terminal device may feed back hybrid automatic repeat request-acknowledgement (HARQ-acknowledgement, HARQ-ACK) information on an uplink control channel (physical uplink control channel, PUCCH). In actual application, different PUCCH formats may be set based on an amount of the HARQ-ACK information, and the like. For example, as shown in Table 4, five PUCCH formats can be configured.

**Table 4 PUCCH format**

| PUCCH format | Quantity of occupied symbols | Quantity of pieces of payload bit (bit) information |
|---|---|---|
| 0 | 1-2 | ≤2 |
| 1 | 4-14 | ≤2 |
| 2 | 1-2 | >2 |
| 3 | 4-14 | >2 |
| 4 | 4-14 | >2 |

The five PUCCH formats may correspond to different resources. For example, Table 5 shows content defined in a PUCCH format 0, Table 6 shows content defined in a PUCCH format 1, Table 7 shows content defined in a PUCCH format 2, Table 8 shows content defined in a PUCCH format 3, and Table 9 shows content defined in a PUCCH format 4.

**Table 5 Content defined in a PUCCH format 0**

| Field content | Meaning | Remarks |
|---|---|---|
| pucch-ResourceId | PUCCH resource number | Used to identify different resources |
| startingPRB | Starting frequency-domain location of a PUCCH resource | Unit: physical resource block (physical resource block, PRB) |
| intraSlotFrequencyHopping | Whether intra-slot frequency hopping is supported | |
| secondHopPRB | Location of a second-hop PRB if frequency hopping is supported | |
| initialCyclicShift | Initial cyclic shift | This identifier is for selecting a sequence, to form a cyclic shift sequence together with NACK or ACK information of a HARQ-ACK |
| nrofSymbols | Quantity of PUCCH symbols | Value 1 or 2 |
| startingSymbolIndex | PUCCH starting symbol | Value 0, 1, 2, ..., or 13 |

**Table 6 Content defined in a PUCCH format 1**

| Field content | Meaning | Remarks |
|---|---|---|
| pucch-ResourceId | PUCCH resource number | Used to identify different resources |
| startingPRB | Starting frequency-domain location of a PUCCH resource | Unit: PRB |
| intraSlotFrequencyHopping | Whether intra-slot frequency hopping is supported | |
| secondHopPRB | Location of a second-hop PRB if frequency hopping is supported | |
| initialCyclicShift | Initial cyclic shift | This identifier is for selecting a sequence, to form a cyclic shift sequence together with NACK or ACK information of a HARQ-ACK |
| nrofSymbols | Quantity of PUCCH symbols | Value 4, 5, ..., or 14 |
| startingSymbolIndex | PUCCH starting symbol | Value 0, 1, 2, ..., or 10 |
| timeDomainOCC | Timing orthogonal code sequence | When a plurality of UEs use a same time-frequency resource, the orthogonal code is used to distinguish different user data |

**Table 7 Content defined in a PUCCH format 2**

| Field content | Meaning | Remarks |
|---|---|---|
| pucch-ResourceId | PUCCH resource number | Used to identify different resources |
| startingPRB | Starting frequency-domain location of a PUCCH resource | Unit: PRB |
| intraSlotFrequencyHopping | Whether intra-slot frequency hopping is supported | |
| secondHopPRB | Location of a second-hop PRB if frequency hopping is supported | |
| nrofPRBs | Quantity of PUCCH frequency-domain resources | Value 1, 2, ..., or 16 |
| nrofSymbols | Quantity of PUCCH symbols | Value 1 or 2 |
| startingSymbolIndex | PUCCH starting symbol | Value 0, 1, 2, ..., or 13 |

**Table 8 Content defined in a PUCCH format 3**

| Field content | Meaning | Remarks |
|---|---|---|
| pucch-ResourceId | PUCCH resource number | Used to identify different resources |
| startingPRB | Starting frequency-domain location of a PUCCH resource | Unit: PRB |
| intraSlotFrequencyHopping | Whether intra-slot frequency hopping is supported | |
| secondHopPRB | Location of a second-hop PRB if frequency hopping is supported | |
| nrofPRBs | Quantity of PUCCH frequency-domain resources | Value 1, 2, ..., or 16 |
| nrofSymbols | Quantity of PUCCH symbols | Value 4, 5, ..., or 14 |
| startingSymbolIndex | PUCCH starting symbol | Value 0, 1, 2, ..., or 10 |

**Table 9 Content defined in a PUCCH format 4**

| Field content | Meaning | Remarks |
|---|---|---|
| pucch-ResourceId | PUCCH resource number | Used to identify different resources |
| startingPRB | Starting frequency-domain location of a PUCCH resource | Unit: PRB |
| intraSlotFrequencyHopping | Whether intra-slot frequency hopping is supported | |
| secondHopPRB | Location of a second-hop PRB if frequency hopping is supported | |
| occ-Length | Orthogonal code length | Value 1, 2, ..., or 16 |
| occ-Index | Orthogonal code index | |
| nrofSymbols | Quantity of PUCCH symbols | Value 4, 5, ..., or 14 |
| startingSymbolIndex | PUCCH starting symbol | Value 0, 1, 2, ..., or 10 |

When the first terminal device feeds back the LBT success or failure information to the network device at the second moment, a HARQ-ACK of a Uu interface may be multiplexed. That is, a feedback is provided on a HARQ-ACK feedback channel. Alternatively, indication information of a feedback channel resource allocated by the network device may be received, and the LBT success or failure information is fed back on a corresponding feedback channel based on a feedback channel resource indication in the indication information. This is not specifically limited in embodiments of this application.

It may be understood that if the network device indicates the first terminal device to perform channel listening on a plurality of sidelinks over the unlicensed spectrum, the first terminal device may report a plurality of channel listening results, or report a channel listening result of a sidelink over an unlicensed spectrum with a poorest detection capability. Because the poorest detection capability indicates a lowest interference level on the sidelink over the unlicensed spectrum, data transmission can be better performed on the sidelink over the unlicensed spectrum.

In this embodiment of this application, the first terminal device feeds back the channel listening result to the network device. The network device may reallocate a resource of the sidelink over the unlicensed spectrum to the first terminal device based on the feedback of the first terminal device when the channel listening fails. Therefore, efficiency of allocating the resource of the sidelink over the unlicensed spectrum is improved.

Optionally, in this embodiment of this application, to ensure that the first terminal device has completed the LBT process at the second moment, a time period from the first moment to the second moment may be set to be greater than or equal to a predetermined threshold.

A predetermined threshold d in an example may be associated with at least one of the following information: a receiving time T1 required for the first terminal device to receive control signaling, maximum listening duration T2 for the first terminal device to perform LBT, and channel listening evaluation and feedback information generation duration T3. For example, d may be a sum of T1, T2, and T3.

T1 and T3 depend on a capability of the first terminal device. For example, a subcarrier spacing (subcarrier spacing, SCS) corresponding to the first terminal device is equal to 15 KHz. It is generally considered that T1 and T3 each include three or five symbols, and T2 = t1 + n*CWp*t2 + mp*t2. n is a weighting coefficient, and a value may be 1.5 or 2. t1 is a channel detection time unit (for example, 16 us) before a contention window. t2 is a time unit (for example, 16 us) for subsequent channel detection.

According to the claimed invention, based on the embodiment corresponding to FIG. 2, the method in this embodiment of this application further includes: The first terminal device reports a data transmission status between the first terminal device and the second terminal device to the network device at a third moment. The first indication information further includes third moment information.

In this embodiment of this application, the first terminal device (as a transmit end) may send data to one or more second terminal devices (as a receive end or receive ends) in a broadcast manner, a multicast manner, a unicast manner, or the like.

The broadcast mode means that the transmit end sends data in a broadcast mode, and all receive ends can parse control channel information (sidelink control information, SCI) and service channel information (sidelink shared channel, SSCH). In the broadcast mode, to ensure that all the receive ends can parse control information, control information data may not be scrambled or a scrambling code known to all the receive ends may be used.

In the multicast mode, data may be sent in the broadcast mode. All the receive ends can parse control channel information and service channel information. Control information data is not scrambled or a scrambling code known to all the receive ends is used. In addition, a multicast ID is added to the control information, and a receive end of the control information is parsed out. Whether to receive the data is determined by identifying the multicast ID.

In the broadcast mode, there is no HARQ mechanism for service data at the receive end (that is, the receive end does not need to feed back an ACK/a NACK, and the transmit end does not need to determine, based on the feedback, whether to perform retransmission, either). There is no adaptive coding (adaptive module coding, AMC). That is, the transmit end does not perform coding adjustment based on channel quality.

In the unicast (unicast) mode or the multicast mode, the transmit end may determine, based on a received feedback, whether to perform retransmission (that is, a HARQ process needs to be supported), and perform coding adjustment based on a channel fed back by the receive end. A HARQ feedback dedicated channel on a sidelink is a physical sidelink feedback channel (physical sidelink feedback channel, PSFCH).

For example, the first terminal device and the second terminal device may perform HARQ-based data block transmission in two manners.

In one manner, the first terminal device divides a data block (transport block, TB) into a plurality of subblocks (code blocks, CBs), and performs cyclic redundancy check (cyclic redundancy check, CRC) and coding on each CB. At a receive end, when all CBs in the second terminal device are correctly decoded, an ACK is fed back to the first terminal device, where the ACK indicates that the TB is correctly received. After receiving the ACK, the first terminal device sends new TB data. When an error occurs in any CB in the currently received TB, a NACK is fed back to the first terminal device. After receiving the NACK, the first terminal device re-sends the TB until a feedback ACK is received or a quantity of retransmissions reaches a specific threshold.

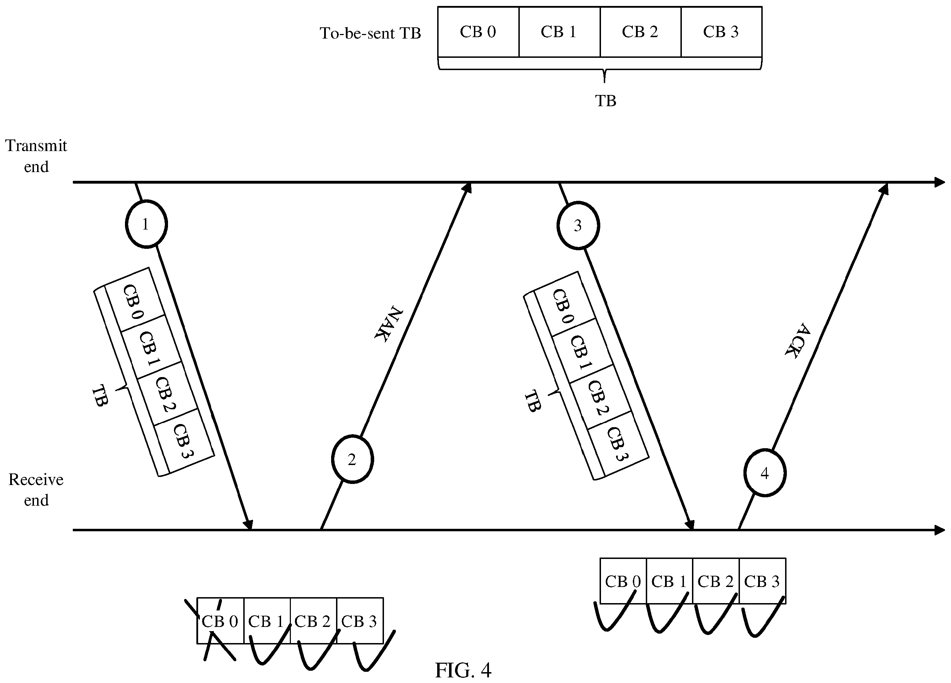

For example, as shown in FIG. 4, the transmit end (the first terminal device) divides a TB into four CBs (CRC attachment and coding are performed on each CB, and finally, CRC attachment is performed on the entire TB once) and sends data to the receive end (the second terminal device). The receive end receives the four CBs in the TB, and performs demodulation, decoding, and CRC check. A result is that a CB 0 is incorrect, and others are correct. The receive end feeds back a NAK (indicating that the received TB is incorrect) to the transmit end. The transmit end retransmits the TB. The receive end receives the TB, combines the TB with the data transmitted last time, and performs demodulation, decoding, and check. After all the CBs and the TB are correctly checked, an ACK is sent to the transmit end, to indicate that the TB is correctly received.

In the other manner, the first terminal device divides the TB into a plurality of CBs (for example, N CB blocks, where N depends on a length of the TB). The N CBs are grouped into M subblock groups (code block groups, CBGs). M is usually a network configuration parameter. CRC check and coding are performed on each CB. The second terminal device demodulates and decodes all CBs in each CBG, and performs CRC check. When all the CBs in the CBG are correctly decoded, an ACK is fed back to the first terminal device, to indicate that the CBG is correctly received. The second terminal device feeds back decoding statuses of the M CBGs to the first terminal device. When receiving the feedback, the first terminal device separately determines whether to re-send a CBG. Generally, if a CBG corresponds to a feedback NAK, the CBG is re-sent. Otherwise, the CBG is not re-sent. The first terminal device re-sends the CBG until the second terminal device feeds back an ACK or a quantity of retransmissions reaches a specific threshold.

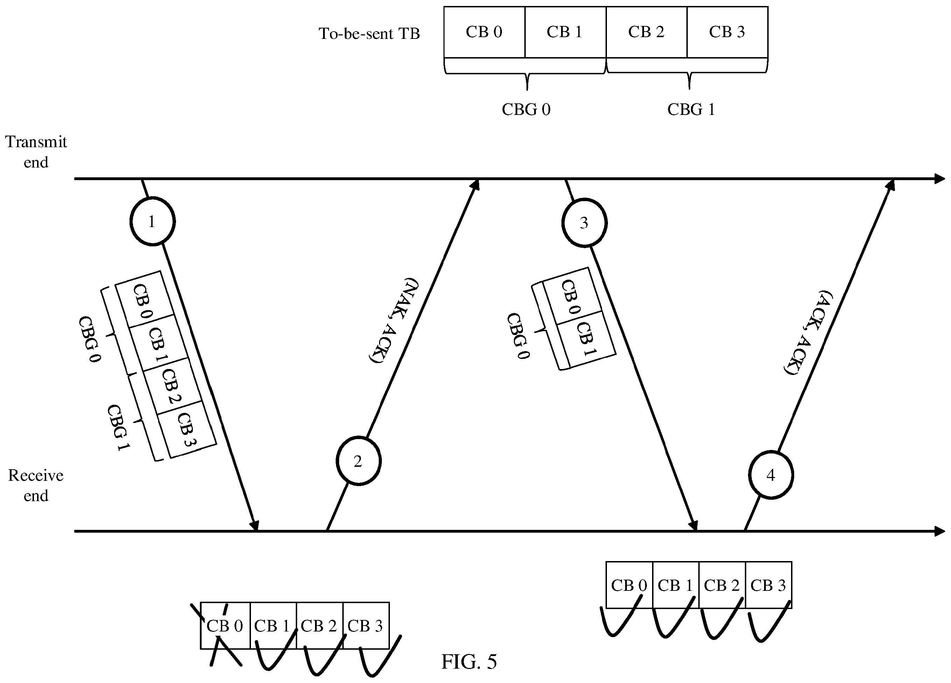

For example, as shown in FIG. 5, the transmit end (the first terminal device) divides a TB into four CBs (CRC attachment and coding are performed on each CB, and finally CRC attachment is performed on the entire TB once) and sends data to the receive end (the second terminal device). The receive end receives the four CBs in the TB, and performs demodulation, decoding, and CRC check. CRC on a CB 0 in a CBG 0 is incorrect, CRC on a CB 1 in the CBG 0 is correct, and both CRC on a CB 2 and CRC on a CB 3 in a CBG 1 are correctly decoded. The receive end feeds back a HARQ-ACK corresponding to the CBG 0 as a NAK, and feeds back a HARQ-ACK corresponding to the CBG 1 as an ACK. The transmit end retransmits the CBG 0. The receive end receives the CBG 0, decodes the CBG 0 (which may be combined with the initially transmitted CBG 0), and performs demodulation, decoding, and check. After all CBs and the TB are correctly checked, a HARQ-ACK corresponding to the CBG 0 is fed back as an ACK, and a HARQ-ACK corresponding to the CBG 1 is fed back as an ACK.

When the first terminal device performs data transmission with the second terminal device, in a HARQ-ACK mechanism, the second terminal device feeds back HARQ-ACK information to the first terminal device, to determine whether a related data packet is correctly received. If a NACK is fed back, it indicates that the data packet is not correctly received. The transmit end needs to perform retransmission. If an ACK is fed back, it indicates that the data packet is correctly received. The first terminal device does not need to perform retransmission.

A data transmission status between the first terminal device and the second terminal device may reflect quality of data transmitted between the first terminal device and the second terminal device on a sidelink over an unlicensed spectrum. The first terminal device reports the data transmission status to the network device, so that the network device may determine, based on the data transmission status, a parameter used for next resource allocation. For example, if a transmission failure rate of the sidelink over the unlicensed spectrum is high, a larger parameter of an LBT contention window may be configured in a next configuration. This is not specifically limited in embodiments of this application.

Optionally, the data transmission status between the first terminal device and the second terminal device includes at least one of the following: a quantity of times of successful data transmission, a quantity of times of failed data transmission, an error rate of data transmission, and signal energy of data transmission. The quantity of times of successful data transmission, the quantity of times of failed data transmission, and the error rate of data transmission may directly reflect quality of data transmission. In further research, it is found that a main factor causing a NACK is poor channel quality, and especially, if there are a plurality of consecutive NACKs, it indicates that the channel quality is interfered. Therefore, the signal energy of data transmission may also reflect the quality of data transmission.

For example, when data on the sidelink over the unlicensed spectrum is unidirectionally transmitted in a unicast manner (for example, after the first terminal device initiates channel listening on the sidelink over the unlicensed spectrum and obtains the sidelink over the unlicensed spectrum, only the first terminal device sends data to the second terminal device, or only the second terminal device sends data to the first terminal device), and when determining the data transmission status, the first terminal device may collect statistics on a quantity of NACKs or a quantity of ACKs fed back by the second terminal device, or calculate the error rate of data transmission based on a quantity of NACKs and a quantity of ACKs, or collect statistics on the signal energy of data transmission.

When data on the sidelink over the unlicensed spectrum is bidirectionally transmitted in a unicast manner (for example, after the first terminal device initiates channel listening on the sidelink over the unlicensed spectrum and obtains the sidelink over the unlicensed spectrum, the first terminal device sends data to the second terminal device and shares the obtained first time period information with the second terminal device, and the second terminal device sends data to the first terminal device), and when determining the data transmission status, the first terminal device may collect statistics on a quantity of NACKs or a quantity of ACKs fed back by the second terminal device, and collect statistics on a quantity of NACKs or a quantity of ACKs fed back by the first terminal device to the second terminal device; or calculate the error rate of data transmission based on a total quantity of NACKs and a total quantity of ACKs; or collect statistics on the signal energy of data transmission.

When data on the sidelink over the unlicensed spectrum is transmitted in a multicast manner (for example, after the first terminal device initiates channel listening on the sidelink over the unlicensed spectrum and obtains the sidelink over the unlicensed spectrum, the first terminal device sends data to a plurality of second terminal devices or one second terminal device group), a HARQ-ACK feedback manner may be set. For example, when the feedback manner is set to "NACK only", it indicates that a feedback is provided only when decoding is incorrect. Further, the first terminal device may calculate a quantity of correct receiving times based on a quantity of NACKs that are fed back. For example, there are M second terminal devices, and N second terminal devices feed back NACKs. In this case, there are M-N second terminal devices that feed back ACKs. Alternatively, when the feedback manner is set to "ACK only", it indicates that a feedback is provided only when decoding is correct. Further, the first terminal device may calculate a quantity of incorrect receiving times based on a quantity of ACKs that are fed back. For example, there are M second terminal devices, and N second terminal devices feed back ACKs. In this case, there are M-N second terminal devices that feed back NACKs. Alternatively, when the feedback manner is set to "NAK/ACK", it indicates that both a NAK and an ACK are fed back, and the first terminal device may calculate a quantity of NACKs and ACKs based on the feedback. Adaptively, when determining the data transmission status, the first terminal device may collect statistics on a quantity of NACKs or a quantity of ACKs fed back by the plurality of second terminal devices, or calculate the error rate of data transmission based on a total quantity of NACKs and a total quantity of ACKs, or collect statistics on the signal energy of data transmission.

In an optional implementation, in data transmission, if the first terminal device receives neither a NACK fed back by the second terminal device nor an ACK fed back by the second terminal device, the first terminal device may determine signal strength based on received energy or an energy threshold after signal correlation. For example, if the energy is lower than a specific threshold, the feedback information is considered as a NACK. If the energy is higher than a specific threshold, the feedback information may be considered as a NACK.

In an optional implementation, when the data transmission status is the error rate of data transmission, to reduce an amount of feedback information, the error rate of data transmission may be quantized.

For example, if a quantity of NACKs is X and a quantity of ACKs is Y, the error rate of data transmission is X/(X+Y). When X/(X+Y) is quantized, if 1 bit is used for quantization, it may be specified that 0 is fed back when the error rate is greater than 80%, and 1 is fed back when the error rate is less than 80%. Alternatively, it may be specified that 1 is fed back when the error rate is greater than 80%, and 0 is fed back when the error rate is less than 80%. If 2 bits are used for quantization, it may be specified that 11 is fed back when the error rate is 0% to 20%, 10 is fed back when the error rate is 20% to 50%, 01 is fed back when the error rate is 50% to 80%, 00 is fed back when the error rate is 80% to 20%. It may be understood that a specific quantization manner may be determined based on an actual application scenario. This is not specifically limited in embodiments of this application.

In an optional implementation, when the data transmission status is the signal energy of data transmission, the signal energy may be at least one of: a reference signal received power (reference signal received power, RSRP), a received signal strength indicator (received signal strength indicator, RSSI), and reference signal received quality (reference signal received quality, RSRQ).

The RSRP is an average value of powers of received signals on all resource elements REs that carry a reference signal in a symbol. The parameter indicates a power of a received wanted signal, and may determine a distance or a path loss. The RSSI is an average value of powers of all signals (including a pilot signal, a data signal, a neighboring cell interfering signal, a noise signal, and the like) received in the symbol. The parameter indicates a received signal strength indicator and is an optional part of a radio transmission layer. The parameter is used to determine link quality and whether to increase broadcast transmission strength. The RSRQ is a ratio of the RSRP to the RSSI. Because the RSRP and the RSSI may be measured based on different bandwidths, a coefficient m may be used for adjustment. That is, RSRQ = m*RSRP/RSSI.

In this embodiment of this application, the first terminal device may report the data transmission status between the first terminal device and the second terminal device to the network device on a licensed spectrum or a dedicated spectrum, to ensure communication quality. Alternatively, the first terminal device may report the data transmission status between the first terminal device and the second terminal device to the network device on an unlicensed spectrum. This is not specifically limited in embodiments of this application.

In an optional implementation of this embodiment of this application, third moment information may be indicated by using a configurable offset or a dynamic time-domain starting point.

In this embodiment of this application, to adapt to transmission on a sidelink, third moment information having a larger time-domain range than a first moment may need to be used. A quantity of bits for defining the third moment information may exceed 3, for example, 4 bits are used for indication. A value indicating the time-domain range is {1, 2, 3, 4, 6, 7, 8, 9, 10, 11, 12, 13, 14, 15, 16}. In specific application, a bit may be used for direct indication, or a higher layer definition may be used to indicate an actual meaning of a 4-bit bit width. This is not specifically limited in embodiments of this application.

In conventional data scheduling based on a Uu interface, a feedback timing of a HARQ-ACK includes a feedback timing indication. For example, a value corresponding to the feedback timing indication may be indicated by using 3 bits. For example, 001 indicates that after scheduling is received in (a slot n), a HARQ-ACK is fed back in a slot n+1, where n corresponds to a slot for scheduling resource DCI. Alternatively, another value may be configured with reference to signaling, for example, 001. When the signaling configuration indicates 3, it indicates that after scheduling is received in (a slot n), a HARQ-ACK is fed back in a slot n+3. However, in a conventional scheduling manner, a value indicated by the slot n is determined. If the time-domain range of the feedback timing indication is large, a value of an offset k in a slot n+k is large, and large signaling overheads are caused when the value of k is indicated. For example, when k has 16 cases, 4 bits are required. When k has 32 cases, 5 bits are required.

Therefore, in this embodiment of this application, to avoid signaling overheads caused by an excessively large value of k, the network device may indicate the third moment information by using the configurable offset or the dynamic time-domain starting point.

For example, in an implementation of configuring the configurable offset offset, optionally, a value of the offset may be configured by a higher layer of a base station. For example, a current timing indicator 000 indicates 0. When the offset is configured to 2, 000 corresponds to 2. When the offset is configured to 5, 000 corresponds to 5. That is, an actual value = a value indicated by a bit + the offset. For example, Table 10 shows a data transmission status feedback timing table for indicating the third moment information.

**Table 10 Data transmission status feedback timing table**

| Timing indicator | 000 | 001 | 010 | 011 | 100 | 101 | 110 | 111 |
|---|---|---|---|---|---|---|---|---|
| Offset = 0 | 0 | 1 | 2 | 3 | 4 | 5 | 6 | 7 |
| Offset = 1 | 1 | 2 | 3 | 4 | 5 | 6 | 7 | 8 |
| Offset = 5 | 5 | 6 | 7 | 8 | 9 | 10 | 11 | 12 |

Alternatively, a current timing indicator 000 indicates 1. When the offset is configured to 2, 000 corresponds to 3. When the offset is configured to 5, 000 corresponds to 6. That is, an actual value = a value indicated by a bit + 1 + the offset. For example, Table 11 shows another data transmission status feedback timing table for indicating the third moment information.

**Table 11 Data transmission status feedback timing table**

| Timing indicator | 000 | 001 | 010 | 011 | 100 | 101 | 110 | 111 |
|---|---|---|---|---|---|---|---|---|
| Offset = 0 | 1 | 2 | 3 | 4 | 5 | 6 | 7 | 8 |
| Offset = 4 | 5 | 6 | 7 | 8 | 9 | 10 | 11 | 12 |

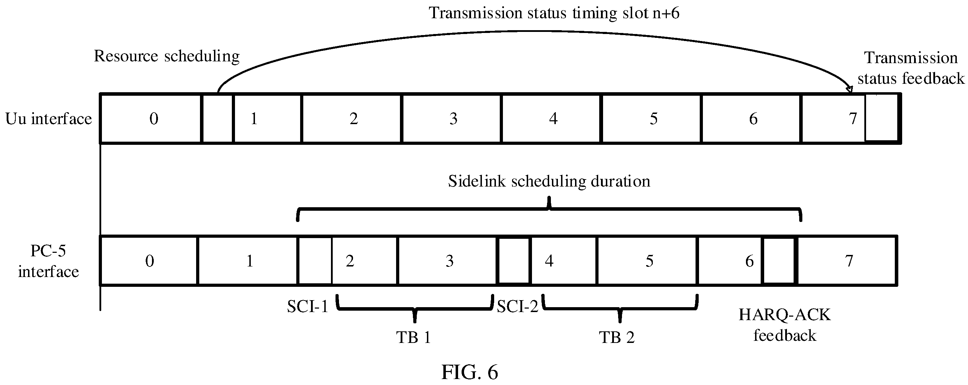

For example, in an implementation of configuring the dynamic time-domain starting point, the time-domain starting point may be defined as a reference time point in data transmission of a sidelink, for example, may be a corresponding slot for receiving the first indication, a first corresponding slot for scheduling sidelink control information (sidelink control information, SCI) on the sidelink, a last corresponding slot for scheduling SCI onthe sidelink, or a slot corresponding to an end of data transmission scheduled on the sidelink (transmission of a last TB in FIG. 6), or a corresponding slot for scheduling a HARQ-ACK feedback on the sidelink this time. The dynamic starting point may be indicated through DCI delivery, or configured by using a higher layer message. This is not specifically limited in embodiments of this application.

For example, as shown in FIG. 6, it is assumed that slot boundaries of a Uu interface and PC-5 are aligned. That is, a slot number of the Uu interface is the same as a slot number of the PC-5 interface. If the offset is 0, content of resource scheduling and third feedback information is as follows:

Base station resource scheduling (first indication information) is sent in a slot 1. It is expected that a terminal sends SCI in a slot 2, and transmission of a last TB is completed in a slot 5. The base station expects the terminal to feed back a transmission status in a slot 7. When DCI indicates that the dynamic starting point is a resource scheduling slot (a slot 1), a value of k should be 6, that is, a slot 1 + 7 + 0 = 7. When DCI indicates that the dynamic starting point is a SCI slot (a slot 2), a value of k should be 5, that is, a slot 2 + 5 + 0 = 7. When DCI indicates that the dynamic starting point is an end of sidelink transmission (a slot 5), a value of k should be 2, that is, a slot 5 + 2 + 0 = 7.

It may be understood that a reference location of a related offset may be defaulted in a protocol or may be determined according to a higher layer signaling configuration method, and the offset k may be transmitted in signaling. The dynamic time-domain starting point may be indicated in the DCI. This may reduce an indication range of the offset, thereby reducing signaling overheads, and improving indication flexibility.

In conclusion, in this embodiment of this application, the first terminal device reports the data transmission status between the first terminal device and the second terminal device to the network device, so that the network device can better schedule the resource of the sidelink over the unlicensed spectrum based on the data transmission status.

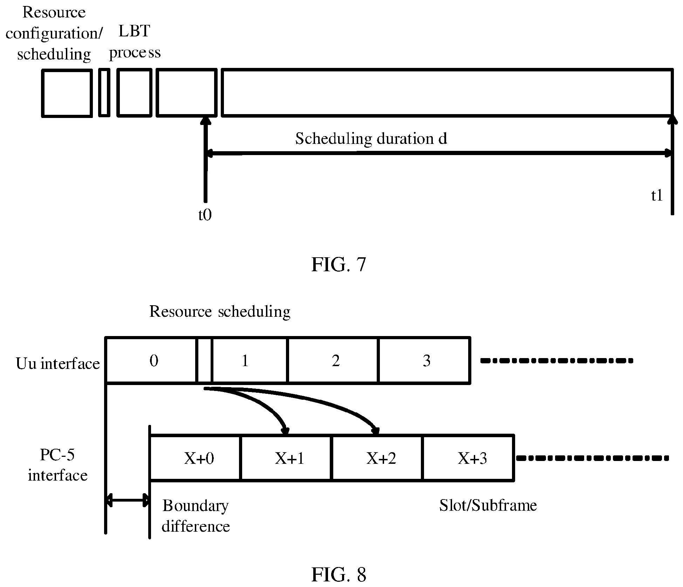

In an optional implementation of this embodiment of this application, it is considered that the first time period information may be indicated by indicating a start time unit of the first time period (or referred to as a start time of data transmission, or referred to as duration of data transmission) and a time length of the first time period. For example, as shown in FIG. 7, t0 may be the start time unit of the first time period, scheduling duration d may be the time length of the first time period, t1 may be an end time unit of the first time period, and t1 = t0 + d.

It should be noted that, for the sidelink over the unlicensed spectrum, after receiving a resource allocation command (that is, the first indication information), the first terminal device needs to perform LBT. A specific time point at which LBT succeeds cannot be predicted when the network device sends the resource allocation command. After receiving the resource allocation command, the first terminal device may start LBT at t0, or may start LBT before t0. Therefore, t0 may also be understood as an earliest data sending start time.

When time units (such as subframes or slots) of the Uu interface and the PC5 interface are not aligned, for example, when the first terminal device uses a satellite navigation system (for example, a GPS, a GNSS, or a BeiDou system) as a synchronization source, the first terminal device and the network device may not have a same synchronization source. Therefore, the time units of the Uu interface and the PC5 interface may not be aligned. For example, a moment t0 indicated by the network device is not a time unit boundary of the PC5.

For example, as shown in FIG. 8, if scheduling information is received in a time unit n = 1, it indicates that a scheduling resource actually starts from a slot n+1, that is, a time unit marked "2" of the Uu interface in FIG. 8. When the time unit corresponds to a time unit of the PC-5, the time unit overlaps x+1 and x+2. Consequently, an inconsistency may occur when the first terminal device determines the earliest data sending start time. Therefore, an earlier time unit in two overlapping time units on the PC-5 may be used as an actual earliest data sending time of the first terminal device. That is, the first terminal device considers x+1 as a start slot. Alternatively, a later time unit in two overlapping time units on the PC-5 is used as an actual earliest data sending time of the first terminal device. That is, the first terminal device considers x+2 as a start slot.

In this embodiment of this application, when the time units (for example, the subframes or the slots) of the Uu interface and the PC5 interface are not aligned, the actual earliest data sending time of the first terminal device may be determined. This avoids confusion caused when each terminal device independently determines an actual earliest data sending time.

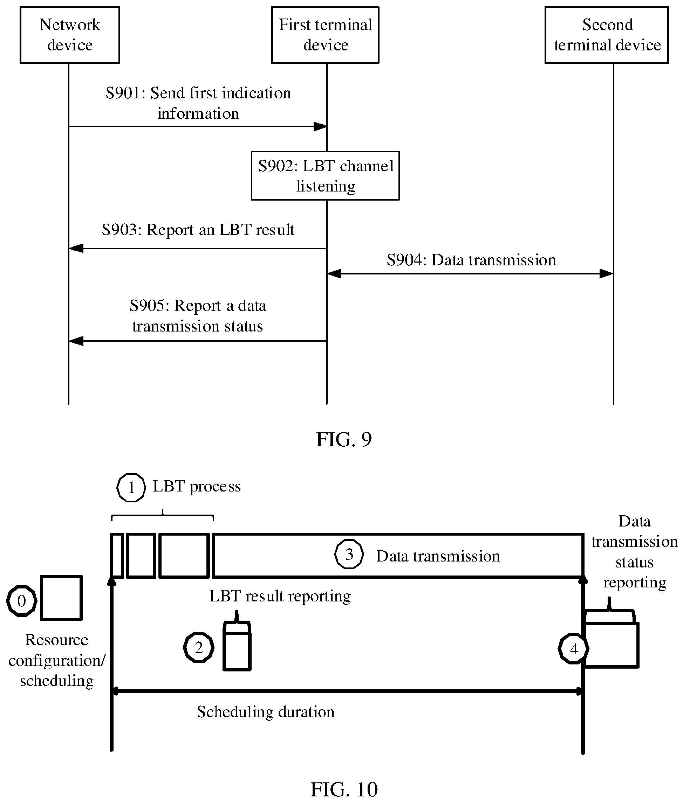

FIG. 9 is a schematic flowchart of interaction of a data sending method according to an embodiment of this application. The method includes the following steps.

Step S901: A network device sends first indication information to a first terminal device at a first moment, where the first indication information is used to indicate a resource that is of a sidelink over an unlicensed spectrum and that is configured by the network device, and the first indication information includes a channel listening parameter and first time period information.

Step S902: The first terminal device performs channel listening on the sidelink over the unlicensed spectrum based on the channel listening parameter.

Step S903: The first terminal device reports a channel listening result to the network device at a second moment.

Step S904: When the channel listening result is that the listening succeeds, the first terminal device sends first data to a second terminal device on the sidelink over the unlicensed spectrum within a first time period.

Step S905: The first terminal device reports a data transmission status between the first terminal device and the second terminal device to the network device at a third moment.

For example, FIG. 10 is a schematic diagram of a timing corresponding to step S901 to step S905. First, the network device may configure a resource of a sidelink over an unlicensed spectrum for the first terminal device, and send the resource of the sidelink over the unlicensed spectrum to the first terminal device by using indication information. Then, the first terminal device may perform channel listening on the sidelink over the unlicensed spectrum based on the configuration of the network device, and report a channel listening result to the network device. When the channel listening result is that the listening succeeds, the first terminal device may send data to the second terminal device on the sidelink over the unlicensed spectrum, receive data sent by the second terminal device, and report a data transmission status to the network device. That is, according to the method combining indication by the network device and channel listening by the terminal device, the first terminal device can send the data to the second terminal device on the sidelink over the unlicensed spectrum. In addition, the process of combining coordinated scheduling by the network device and autonomous channel listening by the terminal device can not only meet a usage rule of an unlicensed spectrum, but also enable devices in a system to coordinate and cooperate with each other. This can improve utilization of the unlicensed spectrum and reduce interference between the devices.

It should be noted that, in step S901 to step S905, when the first terminal device reports the channel listening result to the network device, the network device receives the channel listening result. When the first terminal device reports the data transmission status to the network device, the network device receives the data transmission status. There are optional steps in step S901 to step S905. For a specific implementation process, refer to the detailed description in the foregoing embodiments. Details are not described herein again.

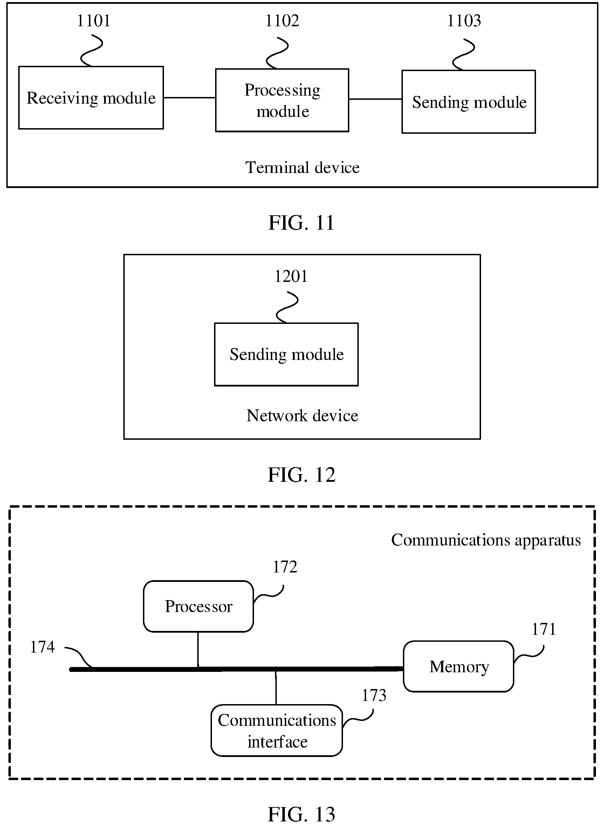

FIG. 11 is a schematic diagram of a structure of a communications apparatus according to an embodiment of this application. The communications apparatus in this embodiment of this application may be deployed in a first terminal device. The apparatus in this embodiment of this application includes a receiving module 1101, a processing module 1102, and a sending module 1103. The receiving module 1101 is configured to receive, at a first moment, first indication information sent by a network device. The first indication information is used to indicate a resource that is of a sidelink over an unlicensed spectrum and that is configured by the network device. The first indication information includes a channel listening parameter and first time period information. The processing module 1102 is configured to perform channel listening on the sidelink over the unlicensed spectrum based on the channel listening parameter. The sending module 1103 is configured to determine, based on a channel listening result, whether to send first data to a second terminal device on the sidelink over the unlicensed spectrum within a first time period.

In a possible design, the sending module is specifically configured to: when the channel listening result is that the listening succeeds, send the first data to the second terminal device on the sidelink over the unlicensed spectrum within the first time period.

In a possible design, the sending module is further configured to send second indication information to the second terminal device. The second indication information is used to indicate the second terminal device to send second data to the first terminal device within a second time period. The first time period includes the second time period. The receiving module is further configured to receive, within the second time period, the second data sent by the second terminal device.

In a possible design, the channel listening parameter includes a listen-before-talk LBT type. The processing module is specifically configured to perform the channel listening on the sidelink over the unlicensed spectrum based on the LBT type.

In a possible design, the channel listening parameter further includes a quantity of listening times N. The processing module is further specifically configured to perform the channel listening on the sidelink over the unlicensed spectrum for N times based on the LBT type. N is a natural number.

In a possible design, the channel listening parameter further includes LBT maximum listening duration. The LBT maximum listening duration is a longest listening time for the first terminal device to determine whether the sidelink over the unlicensed spectrum is idle. The processing module is further specifically configured to perform the channel listening on the sidelink over the unlicensed spectrum within the LBT maximum listening duration.

In a possible design, the first indication information further includes second moment information. The sending module is further configured to report the channel listening result to the network device at a second moment.

In a possible design, a time period from the first moment to the second moment is greater than or equal to a predetermined threshold.

In a possible design, the first indication information further includes third moment information. The sending module is further configured to report a data transmission status between the first terminal device and the second terminal device to the network device at a third moment.

In a possible design, the data transmission status includes at least one of the following: a quantity of times of successful data transmission, a quantity of times of failed data transmission, an error rate of data transmission, and signal energy of data transmission.

FIG. 12 is a schematic diagram of a structure of a network device according to an embodiment of this application. The network device in this embodiment of this application includes a sending module 1201. The sending module 1201 is configured to send first indication information to a first terminal device at a first moment. The first indication information is used to indicate a resource that is of a sidelink over an unlicensed spectrum and that is configured by the network device. The first indication information includes a channel listening parameter and first time period information. The channel listening parameter is used for the first terminal device to perform channel listening on the sidelink over the unlicensed spectrum.

In a possible design, the channel listening parameter includes at least one of the following: a listen-before-talk LBT type; a quantity of listening times N, where N is a quantity of times that the first terminal device performs the channel listening on the sidelink over the unlicensed spectrum, and N is a natural number; and LBT maximum listening duration, where the LBT maximum listening duration is a longest listening time for the first terminal device to determine whether the sidelink over the unlicensed spectrum is idle.

In a possible design, the first indication information further includes second moment information. The second moment information is used to indicate that the network device receives, at a second moment, a channel listening result reported by the first terminal device.

In a possible design, a time period from the first moment to the second moment is greater than or equal to a predetermined threshold.

In a possible design, the first indication information further includes third moment information. The third moment information is used to indicate that the network device receives, at a third moment, a data transmission status reported by the first terminal device.

In a possible design, the data transmission status includes at least one of the following: a quantity of times of successful data transmission, a quantity of times of failed data transmission, an error rate of data transmission, and signal energy of data transmission.

FIG. 13 is a schematic diagram of a structure of hardware of a communications apparatus according to an embodiment of this application. Refer to FIG. 13. The communications apparatus 17 includes a memory 171, a processor 172, and a communications interface 173. The memory 171, the processor 172, and the communications interface 173 may communicate with each other. For example, the memory 171, the processor 172, and the communications interface 173 may communicate with each other through a communications bus 174. The memory 171 is configured to store a computer program. The processor 172 executes the computer program to implement the method shown in the embodiment shown in FIG. 2 or FIG. 7.

Optionally, the communications interface 173 may further include a transmitter and/or a receiver.

Optionally, the processor may be a central processing unit (central processing unit, CPU), another general-purpose processor, a digital signal processor (digital signal processor, DSP), an application-specific integrated circuit (application-specific integrated circuit, ASIC), or the like. The general-purpose processor may be a microprocessor, or the processor may be any conventional processor or the like. The steps of the methods disclosed with reference to embodiments of this application may be directly performed and completed by a hardware processor, or may be performed and completed by a combination of hardware and software modules in the processor.

An embodiment of this application provides a computer-readable storage medium. The computer-readable storage medium is configured to store a computer program. The computer program is used to implement the method in the embodiment shown in FIG. 2 or FIG. 7.

An embodiment of this application further provides a communications system, including the communications apparatus shown in FIG. 11 and the communications apparatus shown in FIG. 12.

A non-claimed embodiment of this application further provides a system on chip. The system on chip is configured to support a communications apparatus in implementing functions (for example, the first terminal device receives, at the first moment, the first indication information sent by the network device, where the first indication information is used to indicate the resource that is of the sidelink over the unlicensed spectrum and that is configured by the network device, and the first indication information includes the channel listening parameter and the first time period information; the first terminal device performs the channel listening on the sidelink over the unlicensed spectrum based on the channel listening parameter; and the first terminal device determines, based on the channel listening result, whether to send the first data to the second terminal device on the sidelink over the unlicensed spectrum within the first time period) shown in embodiments of this application. The chip is specifically used in a chip system. The chip system may include a chip, or may include a chip and another discrete component. When the foregoing method is implemented by using a chip in a first device, the chip includes a processing unit. Further, the chip may further include a communications unit. The processing unit may be, for example, a processor. When the chip includes the communications unit, the communications unit may be, for example, an input/output interface, a pin, or a circuit. The processing unit performs all or a part of actions performed by each processing module in embodiments of this application. The communications unit may perform a corresponding receiving or sending action, for example, the communications unit may receive configuration signaling sent by the network device. In another specific embodiment, in this embodiment of this application, a processing module of a receiving device may be the processing unit of the chip, and a receiving module or a sending module of a control device is the communications unit of the chip.

Embodiments of this application are described with reference to the flowcharts and/or block diagrams of the methods, the devices (systems), and the computer program products according to embodiments of this application. It should be understood that computer program instructions may be used to implement each process and/or block in the flowcharts and/or block diagrams, and a combination of processes and/or blocks in the flowcharts and/or block diagrams. These computer program instructions may be provided for a general-purpose computer, a dedicated computer, an embedded processor, or a processing unit of another programmable data processing device to generate a machine, so that instructions executed by a computer or the processing unit of the another programmable data processing device generate an apparatus for implementing a specific function in one or more processes in the flowcharts and/or in one or more blocks in the block diagrams.

These computer program instructions may be stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or another programmable data processing device, so that a series of operations and steps are performed on the computer or another programmable device, thereby generating computer-implemented processing. Therefore, the instructions executed on the computer or another programmable device provide steps for implementing a specified function in one or more processes in the flowcharts and/or in one or more blocks in the block diagrams.

## Claims

1. A data sending method, comprising:
receiving (S201), by a first terminal device (20) at a first moment, first indication information sent by a network device (10), wherein the first indication information is used to indicate a resource that is of a sidelink over an unlicensed spectrum and that is configured by the network device (10), and the first indication information comprises a channel listening parameter and first time period information;
performing (S202), by the first terminal device (20), channel listening on the sidelink over the unlicensed spectrum based on the channel listening parameter; and
determining (S203), by the first terminal device (20) based on a channel listening result, whether to send first data to a second terminal device (30) on the sidelink over the unlicensed spectrum within a first time period,
wherein the first indication information further comprises third moment information, and the method further comprises:
reporting, by the first terminal device (20), a data transmission status between the first terminal device (20) and the second terminal device (30) to the network device (10) at a third moment.

2. The method according to claim 1, wherein the determining, by the first terminal device (20) based on a channel listening result, whether to send first data to a second terminal device (30) on the sidelink over the unlicensed spectrum within a first time period comprises:
when the channel listening result is that the listening succeeds, sending, by the first terminal device (20), the first data to the second terminal device (30) on the sidelink over the unlicensed spectrum within the first time period.

3. The method according to claim 2, further comprising:
sending, by the first terminal device (20), second indication information to the second terminal device (30), wherein the second indication information is used to indicate the second terminal device (30) to send second data to the first terminal device (20) within a second time period, and the first time period comprises the second time period; and
receiving, by the first terminal device (20) within the second time period, the second data sent by the second terminal device (30).

4. The method according to any one of claims 1 to 3, wherein the channel listening parameter comprises a listen-before-talk, LBT, type; and
the performing, by the first terminal device, channel listening on the sidelink over the unlicensed spectrum based on the channel listening parameter comprises:
performing, by the first terminal device, the channel listening on the sidelink over the unlicensed spectrum based on the LBT type.

5. The method according to claim 4, wherein the channel listening parameter further comprises a quantity of listening times N; and
the performing, by the first terminal device, the channel listening on the sidelink over the unlicensed spectrum based on the LBT type comprises:
performing, by the first terminal device, the channel listening on the sidelink over the unlicensed spectrum for N times based on the LBT type, wherein N is a natural number.

6. A data receiving method, comprising:
sending, by a network device (10), first indication information to a first terminal device (20) at a first moment, wherein the first indication information is used to indicate a resource that is of a sidelink over an unlicensed spectrum and that is configured by the network device (10), and the first indication information comprises a channel listening parameter and first time period information, wherein
the channel listening parameter is used for the first terminal device (20) to perform channel listening on the sidelink over the unlicensed spectrum,
wherein the first indication information further comprises third moment information, and the third moment information is used to indicate that the network device (10) receives, at a third moment, a data transmission status reported by the first terminal device (20).

7. The method according to claim 6, wherein the channel listening parameter comprises at least one of the following:
a listen-before-talk, LBT, type;
a quantity of listening times N, wherein N is a quantity of times that the first terminal device performs the channel listening on the sidelink over the unlicensed spectrum, and N is a natural number; and
LBT maximum listening duration, wherein the LBT maximum listening duration is a longest listening time for the first terminal device (20) to determine whether the sidelink over the unlicensed spectrum is idle.

8. The method according to claim 6 or 7, wherein the first indication information further comprises second moment information, and the second moment information is used to indicate that the network device (10) receives, at a second moment, a channel listening result reported by the first terminal device (20).

9. The method according to claim 8, wherein a time period from the first moment to the second moment is greater than or equal to a predetermined threshold.

10. A first terminal device (20), configured to perform the method according to any one of claims 1 to 5.

11. A network device (10), configured to perform the method according to any one of claims 6 to 9.

12. A computer-readable storage medium, wherein the computer-readable storage medium is configured to store a computer program which, when executed by a first terminal device, causes the first terminal device to implement the method according to any one of claims 1 to 5.

13. A computer-readable storage medium, wherein the computer-readable storage medium is configured to store a computer program which, when executed by a network device, causes the network device to implement the method according to any one of claims 6 to 9.

14. A communications system, comprising the first terminal device according to claim 10 and the network device according to claim 11.

## Patentansprüche

1. Datensendeverfahren, das Folgendes umfasst:
Empfangen (S201) durch eine erste Endgerätvorrichtung (20) zu einem ersten Zeitpunkt erster Angabeinformationen, die durch eine Netzvorrichtung (10) gesendet werden, wobei die ersten Angabeinformationen verwendet werden, um ein Betriebsmittel anzugeben, das von einer Seitenstrecke über ein nicht lizensiertes Frequenzband ist und das durch die Netzvorrichtung (10) konfiguriert ist, und die ersten Angabeinformationen einen Kanalabhörparameter und erste Zeitperiodeninformationen umfassen;
Ausführen (S202) durch die erste Endgerätvorrichtung (20) eines Kanalabhörens auf der Seitenstrecke über das nicht lizensierte Frequenzband anhand des Kanalabhörparameters; und
Bestimmen (S203) durch die erste Endgerätvorrichtung (20) anhand eines Kanalabhörergebnisses, ob erste Daten an eine zweite Endgerätvorrichtung (30) auf der Seitenstrecke über das nicht lizensierte Frequenzband innerhalb einer ersten Zeitperiode zu senden sind,
wobei die ersten Angabeinformationen ferner dritte Zeitpunktinformationen umfassen und das Verfahren ferner Folgendes umfasst:
Melden durch die erste Endgerätvorrichtung (20) eines Datenübertragungszustands zwischen der ersten Endgerätvorrichtung (20) und der zweiten Endgerätvorrichtung (30) an die Netzvorrichtung (10) zu einem dritten Zeitpunkt.

2. Verfahren nach Anspruch 1, wobei das Bestimmen durch die erste Endgerätvorrichtung (20) anhand eines Kanalabhörergebnisses, ob erste Daten an eine zweite Endgerätvorrichtung (30) auf der Seitenstrecke über das nicht lizensierte Frequenzband innerhalb einer ersten Zeitperiode zu senden sind, Folgendes umfasst: dann, wenn das Kanalabhörergebnis ist, dass das Abhören erfolgreich ist, Senden durch die erste Endgerätvorrichtung (20) der ersten Daten an die zweite Endgerätvorrichtung (30) auf der Seitenstrecke über das nicht lizensierte Frequenzband innerhalb der ersten Zeitperiode.

3. Verfahren nach Anspruch 2, das ferner Folgendes umfasst:
Senden durch die erste Endgerätvorrichtung (20) zweiter Angabeinformationen an die zweite Endgerätvorrichtung (30), wobei die zweiten Angabeinformationen verwendet werden, um der zweiten Endgerätvorrichtung (30) anzugeben, zweite Daten an die erste Endgerätvorrichtung (20) innerhalb einer zweiten Zeitperiode zu senden und die erste Zeitperiode die zweite Zeitperiode umfasst; und
Empfangen durch die erste Endgerätvorrichtung (20) innerhalb der zweiten Zeitperiode der durch die zweite Endgerätvorrichtung (30) gesendeten zweiten Daten.

4. Verfahren nach einem der Ansprüche 1 bis 3, wobei der Kanalabhörparameter einen Hören-vor-Reden-Typ, LBT-Typ, umfasst; und
das Ausführen durch die erste Endgerätvorrichtung eines Kanalabhörens auf der Seitenstrecke über das nicht lizensierte Frequenzband anhand des Kanalabhörparameters Folgendes umfasst:
Ausführen durch die erste Endgerätvorrichtung des Kanalabhörens auf der Seitenstrecke über das nicht lizensierte Frequenzband anhand des LBT-Typs.

5. Verfahren nach Anspruch 4, wobei der Kanalabhörparameter ferner eine Anzahl von Abhörzeiten N umfasst; und
das Ausführen durch die erste Endgerätvorrichtung des Kanalabhörens auf der Seitenstrecke über das nicht lizensierte Frequenzband anhand des LBT-Typs Folgendes umfasst:
Ausführen durch die erste Endgerätvorrichtung des Kanalabhörens auf der Seitenstrecke über das nicht lizensierte Frequenzband für N Zeiten anhand des LBT-Typs, wobei N eine natürliche Zahl ist.

6. Datenempfangsverfahren, das Folgendes umfasst:
Senden durch eine Netzvorrichtung (10) erster Angabeinformationen an eine erste Endgerätvorrichtung (20) zu einem ersten Zeitpunkt, wobei die ersten Angabeinformationen verwendet werden, um ein Betriebsmittel anzugeben, das von einer Seitenstrecke über ein nicht lizensiertes Frequenzband ist und das durch die Netzvorrichtung (10) konfiguriert ist, und die ersten Angabeinformationen einen Kanalabhörparameter und erste Zeitperiodeninformationen umfassen, wobei der Kanalabhörparameter für die erste Endgerätvorrichtung (20) verwendet wird, um ein Kanalabhören auf der Seitenstrecke über das nicht lizensierte Frequenzband auszuführen,
wobei die ersten Angabeinformationen ferner dritte Zeitpunktinformationen umfassen, und die dritten Zeitpunktinformationen verwendet werden, um anzugeben, dass die Netzvorrichtung (10) zu einem dritten Zeitpunkt einen Datenübertragungszustand empfängt, der durch die erste Endgerätvorrichtung (20) gemeldet wird.

7. Verfahren nach Anspruch 6, wobei der Kanalabhörparameter mindestens eines des Folgenden umfasst:
einen Hören-vor-Reden-Typ, LBT-Typ;
eine Anzahl von Abhörzeiten N, wobei N eine Anzahl von Zeiten ist, während der die erste Endgerätvorrichtung das Kanalabhören auf der Seitenstrecke über das nicht lizensierte Frequenzband ausführt, und N eine natürliche Zahl ist; und
eine maximale LBT-Abhördauer, wobei die maximale LBT-Abhördauer eine längste Abhörzeit für die erste Endgerätvorrichtung (20) ist, um zu bestimmen, ob die Seitenstrecke über das nicht lizenzierte Frequenzband ungenutzt ist.

8. Verfahren nach Anspruch 6 oder 7, wobei die ersten Angabeinformationen ferner zweite Zeitpunktinformationen umfassen und die zweiten Zeitpunktinformationen verwendet werden, um anzugeben, dass die Netzvorrichtung (10) zu einem zweiten Zeitpunkt ein Kanalabhörergebnis empfängt, das durch die erste Endgerätvorrichtung (20) gemeldet wird.

9. Verfahren nach Anspruch 8, wobei eine Zeitperiode von dem ersten Zeitpunkt zu dem zweiten Zeitpunkt größer oder gleich einem vorbestimmten Schwellenwert ist.

10. Erste Endgerätvorrichtung (20), die konfiguriert ist, das Verfahren nach einem der Ansprüche 1 bis 5 auszuführen.

11. Netzvorrichtung (10), die konfiguriert ist, das Verfahren nach einem der Ansprüche 6 bis 9 auszuführen.

12. Computerlesbares Speichermedium, wobei das computerlesbare Speichermedium konfiguriert ist, ein Computerprogramm zu speichern, das dann, wenn es durch eine erste Endgerätvorrichtung ausgeführt wird, bewirkt, dass die erste Endgerätvorrichtung das Verfahren nach einem der Ansprüche 1 bis 5 implementiert.

13. Computerlesbares Speichermedium, wobei das computerlesbare Speichermedium konfiguriert ist, ein Computerprogramm zu speichern, das dann, wenn es durch eine Netzvorrichtung ausgeführt wird, bewirkt, dass die Netzvorrichtung das Verfahren nach einem der Ansprüche 6 bis 9 implementiert.

14. Kommunikationssystem, das die erste Endgerätvorrichtung nach Anspruch 10 und die Netzvorrichtung nach Anspruch 11 umfasst.

## Revendications

1. Procédé d'envoi de données, comprenant :
la réception (S201), par un premier dispositif terminal (20) à un premier moment, de premières informations d'indication envoyées par un dispositif de réseau (10), dans lequel les premières informations d'indication sont utilisées pour indiquer une ressource qui est celle d'une liaison latérale sur un spectre sans licence et qui est configurée par le dispositif de réseau (10), et les premières informations d'indication comprennent un paramètre d'écoute de canal et des premières informations de période temporelle ;
l'exécution (S202), par le premier dispositif terminal (20), d'une écoute de canal sur la liaison latérale sur le spectre sans licence sur la base du paramètre d'écoute de canal ; et
la détermination (S203), par le premier dispositif terminal (20) sur la base d'un résultat d'écoute de canal, de s'il faut envoyer des premières données à un second dispositif terminal (30) sur la liaison latérale sur le spectre sans licence pendant une première période temporelle,
dans lequel les premières informations d'indication comprennent en outre des troisièmes informations de moment, et le procédé comprend en outre :
le signalement, par le premier dispositif terminal (20), d'un état de transmission de données entre le premier dispositif terminal (20) et le second dispositif terminal (30) au dispositif de réseau (10) à un troisième moment.

2. Procédé selon la revendication 1, dans lequel la détermination, par le premier dispositif terminal (20) sur la base d'un résultat d'écoute de canal, de s'il faut envoyer des premières données à un second dispositif terminal (30) sur la liaison latérale sur le spectre sans licence pendant une première période temporelle comprend :
lorsque le résultat d'écoute de canal est que l'écoute a réussi, l'envoi, par le premier dispositif terminal (20), des premières données au second dispositif terminal (30) sur la liaison latérale sur le spectre sans licence pendant la première période temporelle.

3. Procédé selon la revendication 2, comprenant en outre :
l'envoi, par le premier dispositif terminal (20), de secondes informations d'indication au second dispositif terminal (30), dans lequel les secondes informations d'indication sont utilisées pour indiquer au second dispositif terminal (30) d'envoyer des secondes données au premier dispositif terminal (20) pendant une seconde période temporelle, et la première période temporelle comprend la seconde période temporelle ; et
la réception, par le premier dispositif terminal (20) pendant la seconde période temporelle, des secondes données envoyées par le second dispositif terminal (30).

4. Procédé selon l'une quelconque des revendications 1 à 3, dans lequel le paramètre d'écoute de canal comprend un type d'accès multiple avec écoute de porteuse, LBT ; et
l'exécution, par le premier dispositif terminal, d'une écoute de canal sur la liaison latérale sur le spectre sans licence sur la base du paramètre d'écoute de canal comprend :
l'exécution, par le premier dispositif terminal, de l'écoute de canal sur la liaison latérale sur le spectre sans licence sur la base du type de LBT.

5. Procédé selon la revendication 4, dans lequel le paramètre d'écoute de canal comprend en outre une quantité d'écoutes N ; et
l'exécution, par le premier dispositif terminal, de l'écoute de canal sur la liaison latérale sur le spectre sans licence sur la base du type de LBT comprend :
l'exécution, par le premier dispositif terminal, de l'écoute de canal sur la liaison latérale sur le spectre sans licence N fois sur la base du type de LBT, dans lequel N est un entier naturel.

6. Procédé de réception de données, comprenant :
l'envoi, par un dispositif de réseau (10), de premières informations d'indication à un premier dispositif terminal (20) à un premier moment, dans lequel les premières informations d'indication sont utilisées pour indiquer une ressource qui est celle d'une liaison latérale sur un spectre sans licence et qui est configurée par le dispositif de réseau (10), et les premières informations d'indication comprennent un paramètre d'écoute de canal et des premières informations de période temporelle, dans lequel le paramètre d'écoute de canal est utilisé par le premier dispositif terminal (20) pour exécuter une écoute de canal sur la liaison latérale sur le spectre sans licence,
dans lequel les premières informations d'indication comprennent en outre des troisièmes informations de moment, et les troisièmes informations de moment sont utilisées pour indiquer que le dispositif de réseau (10) reçoit, à un troisième moment, un état de transmission de données signalé par le premier dispositif terminal (20).

7. Procédé selon la revendication 6, dans lequel le paramètre d'écoute de canal comprend au moins l'un des éléments suivants :
un type d'accès multiple avec écoute de porteuse, LBT ;
une quantité d'écoutes N, dans lequel N est un nombre de fois où le premier dispositif terminal exécute l'écoute de canal sur la liaison latérale sur le spectre sans licence, et N est un entier naturel ; et
une durée d'écoute LBT maximale, dans lequel la durée d'écoute LBT maximale est une durée d'écoute la plus longue pour que le premier dispositif terminal (20) détermine si la liaison latérale sur le spectre sans licence est inactive.

8. Procédé selon la revendication 6 ou 7, dans lequel les premières informations d'indication comprennent en outre des deuxièmes informations de moment, et les deuxièmes informations de moment sont utilisées pour indiquer que le dispositif de réseau (10) reçoit, à un deuxième moment, un résultat d'écoute de canal signalé par le premier dispositif terminal (20).

9. Procédé selon la revendication 8, dans lequel une période temporelle entre le premier moment et le deuxième moment est supérieure ou égale à un seuil prédéterminé.

10. Premier dispositif terminal (20), configuré pour exécuter le procédé selon l'une quelconque des revendications 1 à 5.

11. Dispositif de réseau (10), configuré pour exécuter le procédé selon l'une quelconque des revendications 6 à 9.

12. Support de stockage lisible par ordinateur, dans lequel le support de stockage lisible par ordinateur est configuré pour stocker un programme informatique qui, lorsqu'il est exécuté par un premier dispositif terminal, amène le premier dispositif terminal à mettre en œuvre le procédé selon l'une quelconque des revendications 1 à 5.

13. Support de stockage lisible par ordinateur, dans lequel le support de stockage lisible par ordinateur est configuré pour stocker un programme informatique qui, lorsqu'il est exécuté par un dispositif de réseau, amène le dispositif de réseau à mettre en œuvre le procédé selon l'une quelconque des revendications 6 à 9.

14. Système de communication, comprenant le premier dispositif terminal selon la revendication 10 et le dispositif de réseau selon la revendication 11.
